# FASCICULE DE BREVET EUROPEEN

(11) **EP 4 519 582 B1**
(45) Date de publication et mention de la délivrance du brevet: **01.04.2026**
(21) Numéro de dépôt: 23722880.4
(22) Date de dépôt: 28.04.2023
(51) Int. Cl.: F16C 13/02, F16C 27/02, F16C 27/04, F16C 27/06

(54) **EMBOUT D'EXTRÉMITÉ POUR PROFILÉ ET EN PARTICULIER POUR ROULEAU DE GUIDAGE**
ENDSTÜCK FÜR EIN PROFILTEIL UND INSBESONDERE FÜR EINE FÜHRUNGSROLLE
END PIECE FOR A PROFILED PART AND IN PARTICULAR FOR A GUIDE ROLLER

(30) Priorité: 02.05.2022 FR 2204133
(43) Date de publication de la demande: 12.03.2025
(73) Titulaire: Epsilon Composite, 33340 Gaillan-en-Médoc (FR)
(72) Inventeur: SOUBAIGNE, Sébastien, 33340 Lesparre-Médoc (FR)
(74) Mandataire: Novagraaf Technologies
(86) Numéro de dépôt international: PCT/EP2023/061198
(87) Numéro de publication internationale: WO 2023/213692

(56) Documents cités:
- CN-A- 108 953 372
- GB-A- 761 286
- US-A- 3 301 612
- US-A- 4 339 159

## Description

La présente invention concerne le domaine technique des profilés et rouleaux de guidage pour machine de transformation ou de production de films plastiques ou autres comprenant un profilé pourvu d'embouts d'extrémité dans lesquels sont incorporés des roulements et axes pour monter l'ensemble rotatif sur un cadre fixe et concerne en particulier un embout d'extrémité pour profilé et en particulier pour rouleau de guidage.

### État de la technique

Les rouleaux qui nous intéressent en particulier sont ceux utilisés dans la fabrication de film plastique par extrusion soufflage. Ils sont généralement fabriqués à partir de tube en aluminium et équipés à leur extrémité d'embouts en aluminium dans lesquels sont insérés des roulements et des arbres pour fixer le rouleau libre en rotation sur un cadre prévu à cet effet. Les tubes aluminium sont réalisés selon des procédés d'extrusion. La fixation des embouts est réalisée par frettage, collage ou usinage. Lorsque l'embout en aluminium est mis en place par frettage dans le tube en aluminium, la dilatation thermique entre les deux pièces est constante et le tube est suffisamment résistant pour ne pas fissurer.

Cependant, les rouleaux en aluminium présentent des inconvénients. La masse et l'inertie des rouleaux en aluminium empêchent leur utilisation à des vitesses de rotation importantes, c'est pourquoi, ils sont remplacés par des rouleaux fabriqués à partir de tube en carbone eux-mêmes fabriqués par des procédés de roulage ou des procédés par enroulement filamentaire. Ces types de procédés permettent d'obtenir des rouleaux résistants aux efforts, mais dont le procédé de fabrication ne permet pas une production en continu et est couteux.

Lorsque l'embout en aluminium est mis en place par frettage dans le tube en carbone fabriqué selon un de ces procédés, des phénomènes de dilatation différentielle entre l'aluminium et le carbone peuvent être observés. Le serrage défini pour une température de 20°C ne sera plus le même lorsque le rouleau sera soumis à une température de 80°C pendant son fonctionnement. La solution communément utilisée pour compenser ce phénomène consiste à limiter les zones de serrage de l'embout dans le tube carbone et à définir une réserve de colle. La colle structurelle injectée dans cette réserve entre le tube et l'embout permet d'absorber les dilatations et de maintenir les embouts en position. Cependant, cette solution nécessite des étapes supplémentaires de préparation et de nettoyage des surfaces préalablement au collage et présente d'autres inconvénients non négligeables tels que celui de fournir une tenue mécanique surdimensionnée entre le tube et l'embout rendant son démontage difficile. De plus, outre le fait que le démontage d'un embout en aluminium collé dans un tube en carbone nécessite des moyens importants, il présente le risque d'arrachement de fibres de carbone et donc d'endommagement du tube.

D'autre part, les embouts tels qu'ils sont conçus aujourd'hui permettent d'y loger dedans les roulements selon un montage glissant de façon à pouvoir les enlever et les remettre plusieurs fois si nécessaire pendant la phase d'équilibrage. En effet, pendant cette phase, des mesures sont effectuées pendant que le rouleau est en rotation pour évaluer les défauts d'équilibrage. Ensuite, pour corriger le défaut d'équilibrage le roulement est retiré du rouleau afin de pouvoir intégrer de la masse à l'intérieur par le trou où était le roulement, puis le roulement est replacé dans l'embout pour refaire tourner le rouleau, mesurer de nouveau le défaut d'équilibrage, etc. Le roulement doit pouvoir être monté et démonté facilement. C'est pourquoi le roulement est monté glissant dans l'embout. Ainsi, la phase d'équilibrage est facilitée, mais lorsque le rouleau est monté de façon définitive sur son cadre de travail, le roulement monté glissant entraine une usure prématurée des liaisons et cela induit un remplacement des pièces plus fréquent.

En outre, dans le cas de rouleaux utilisés dans la fabrication de film plastique par extrusion soufflage c'est le film plastique qui entraine le rouleau et celui-ci supporte une charge très faible à la différence avec un système à rouleaux de convoyeur. Donc pour ce type d'utilisation, l'effort nécessaire pour faire tourner le rouleau doit être le plus petit possible et est obtenu en diminuant la masse le plus possible pour atteindre un balourd résiduel acceptable et également pour pouvoir augmenter la vitesse du rouleau ou/et sa longueur.

Enfin, dans le cas de rouleaux fabriqués à partir de tubes en carbone eux-mêmes fabriqués par un procédé de pultrusion, il est important que tout effort radial exercé par l'embout sur le tube soit réduit afin de préserver le tube de l'éclatement. En effet, le tube en carbone fabriqué à partir d'un procédé de pultrusion est majoritairement constitué de fibres de carbone dirigées dans le sens longitudinal (entre 60 et 80% de fibres dans le sens longitudinal), ce qui le rend fragile dans des plans transversaux.

Des embouts avec des nervures sur la périphérie de l'embout pour insérer des paliers dans des dispositifs rotatifs sont connus des documents US 4 339 159 A et CN 108 953 372 A .

### Exposé de l'invention

C'est pourquoi, le but de l'invention est de pallier ces inconvénients en fournissant un embout d'extrémité pour profilé, adapté pour recevoir un roulement pour monter l'ensemble rotatif sur un arbre fixe de montage et démontage facilités capable d'absorber les dilatations et d'éviter l'éclatement tout en fournissant un montage serré entre l'embout et le profilé.

Un autre but de l'invention est de fournir un procédé d'assemblage d'embout sur un profilé pour rouleau de guidage.

À cet effet, l'invention a pour objet un embout destiné à un profilé selon la revendication se présentant sous la forme d'un tube de section interne circulaire d'axe longitudinal ZZ délimité longitudinalement par une extrémité dite intérieure d'embout, prévue pour s'étendre à l'intérieur du profilé, et une extrémité dite extérieure d'embout, et dont les dimensions sont adaptées pour lui permettre d'être emmanché en force depuis l'extrémité intérieure à l'intérieur d'une extrémité de ce profilé, ledit embout comprenant au moins un logement interne cylindrique destiné à recevoir un organe tournant de réglage ou un organe tournant de travail pour monter le profilé en rotation sur un arbre fixe, et ledit logement étant délimité par une paroi tournée vers l'intérieur formant une butée pour ledit organe tournant de réglage ou ledit organe tournant de travail ;
dans lequel l'embout est souple et comprend sur sa surface extérieure une pluralité d'ailettes faisant saillie vers l'extérieur et s'étendant longitudinalement selon l'axe ZZ d'un bord interne de l'embout en direction d'un bord externe de l'embout, lesdites ailettes étant séparées par des gorges (18) s'étendant longitudinalement selon l'axe ZZ dans la même direction que les ailettes, et dans lequel les surfaces extérieures des ailettes de l'embout, adaptées pour être en contact avec la surface interne du profilé, sont conformées pour définir, dans le sens défini depuis l'extrémité intérieure d'embout vers l'extrémité extérieur d'embout, une surface de positionnement et une surface de serrage, ladite surface de positionnement étant située juste après une surface de guidage en forme de cône située du côté de l'extrémité intérieure de l'embout, les surfaces de positionnement et de serrage étant inscrites dans deux surfaces cylindriques de diamètres différents, ladite surface de positionnement étant conformée pour présenter un diamètre égal ou inférieur au diamètre interne du profilé et ladite surface de serrage étant conformée pour présenter un diamètre supérieur au diamètre interne du profilé. L'invention concerne également un dispositif ainsi défini dans lequel la surface de positionnement est conformée pour présenter un diamètre égal ou inférieur au diamètre interne du profilé d'au plus 0,1 mm ; et
- la surface de serrage est conformée pour présenter un diamètre supérieur au diamètre interne du profilé d'une valeur comprise entre 0,2 et 0,4 mm.

L'invention concerne également un embout ainsi défini dans lequel, dans lequel la longueur de la périphérie de l'embout le long d'une section transversale et à l'endroit de la surface desdites ailettes destinée à venir en contact avec la surface interne du profilé correspond entre 20 % et 90 % à la longueur de la périphérie totale de la section dans laquelle s'inscrit l'embout de façon à ce que le contact de l'embout avec le profilé soit discontinu.

L'invention concerne également un embout ainsi défini dans lequel, dans lequel la profondeur des gorges est supérieure à la largeur des ailettes.

L'invention concerne également un embout ainsi défini, comprenant sur son extrémité extérieure un rebord destiné à venir en appui contre le bord du profilé.

L'invention concerne également un embout ainsi défini, comportant :
- une paroi annulaire oblique tournée vers l'intérieur et une lèvre annulaire du côté de l'extrémité intérieure de l'embout formant une paroi annulaire et terminale tournée vers l'intérieur;
- un premier logement interne cylindrique destiné à recevoir un roulement de réglage, ledit roulement de réglage étant monté glissant pour faciliter son démontage hors de l'embout et faciliter des opérations d'équilibrage du profilé et le logement étant terminé par la paroi annulaire, l'embout comprenant un second logement interne cylindrique de diamètre inférieur au diamètre dudit premier logement, situé dans le prolongement de la paroi annulaire, ledit second logement étant destiné à recevoir un roulement de travail de diamètre inférieur au roulement de réglage monté serré lorsque le roulement de réglage n'est pas dans l'embout, ledit second logement étant situé entre la lèvre annulaire et la paroi annulaire, la paroi annulaire étant oblique afin de faciliter l'insertion du roulement de travail dans l'embout.

L'invention concerne également un embout ainsi défini, fabriqué par injection de composite tel que du thermoplastique chargé de particules conductrices.

L'invention concerne également un embout ainsi défini, composé majoritairement d'un matériau souple dont le module de Young est compris entre 3 et 40 GPa et de préférence est compris entre 5 et 25 GPa.

L'invention concerne également un ensemble comprenant au moins un embout ainsi défini et un profilé se présentant sous la forme d'un tube de section interne circulaire d'axe longitudinal ZZ, l'embout étant emmanché en force à l'intérieur d'une extrémité du profilé, l'ensemble comprenant en outre au moins un organe tournant de travail et au moins un organe tournant de réglage.

L'invention concerne également un ensemble ainsi défini, dans lequel la surface de contact de l'organe tournant de travail avec l'embout est entièrement dans la partie de l'embout située entre un premier et second plans transversaux et dans laquelle s'étend longitudinalement selon l'axe ZZ la surface de positionnement, les premier et second plans transversaux et étant perpendiculaires par rapport à l'axe de symétrie longitudinal ZZ de l'embout.

L'invention concerne également un ensemble ainsi défini, dans lequel l'organe tournant de travail est un roulement de travail.

L'invention concerne également un ensemble ainsi défini, dans lequel l'organe tournant de réglage est un adaptateur à roulement de réglage ou un roulement de réglage. L'invention concerne également un ensemble ainsi défini, dans lequel est inséré :
- soit l'adaptateur à roulement de réglage ou le roulement de réglage destiné à être utilisé pour l'opération d'équilibrage d'un rouleau, l'adaptateur à roulement de réglage et le roulement de réglage comportant une bague extérieure, le diamètre de la partie de la bague extérieure en contact avec la paroi interne du logement cylindrique étant égal ou inférieur jusqu'à 0,1 mm au diamètre du logement interne cylindrique afin d'être monté glissant,
- soit le roulement de travail destiné à être utilisé sur une machine de production, le roulement de travail ayant un diamètre extérieur égal ou supérieur jusqu'à 0,1 mm au diamètre du logement interne cylindrique afin d'être monté serré.

L'invention concerne également un ensemble ainsi défini, dans lequel la longueur du premier logement selon l'axe ZZ est telle que lorsque le roulement de réglage est inséré dedans et en butée contre la paroi annulaire, la paroi cylindrique extérieure du roulement de réglage en contact avec la paroi du logement est une bande dont la surface est comprise entre 66% et 90% de la totalité de la paroi extérieure cylindrique du roulement de réglage.

L'invention concerne également un ensemble ainsi défini, dans lequel la surface de contact du roulement de réglage avec l'embout est entièrement dans la partie de l'embout située entre le second plan transversal et un troisième plan transversal dans laquelle s'étend longitudinalement selon l'axe ZZ la surface de serrage, le plan transversal étant perpendiculaires par rapport à l'axe de symétrie longitudinal ZZ de l'embout.

L'invention concerne également un ensemble ainsi défini, dans lequel le diamètre du premier logement destiné à recevoir le roulement de réglage est égal ou supérieur jusqu'à 0,1 mm au diamètre extérieur du roulement de réglage tandis que le diamètre du second logement destiné à recevoir le roulement de travail est égal ou inférieur jusqu'à 0,1 mm et de préférence jusqu'à 0,05 mm au diamètre extérieur du roulement de travail.

L'invention concerne également un ensemble ainsi défini, dans lequel le diamètre du roulement de travail est inférieur d'au moins 2 mm au diamètre du roulement de réglage.

L'invention concerne également un ensemble ainsi défini, dans lequel le profilé est en carbone, est fabriqué selon un procédé de pultrusion et comprend entre 60 % et 80% de fibres dans le sens longitudinal.

L'invention concerne également un procédé d'assemblage d'un cadre de travail à arbres fixes et rouleau de guidage pour machine de transformation ou de production de films plastiques au moyen d'un ensemble ainsi défini comprenant une pluralité d'embout comportant chacun :
- une paroi annulaire oblique tournée vers l'intérieur et une lèvre annulaire du côté de l'extrémité intérieure de l'embout formant une paroi annulaire et terminale tournée vers l'intérieur, et
- un premier logement interne cylindrique destiné à recevoir un roulement de réglage, ledit roulement de réglage étant monté glissant pour faciliter son démontage hors de l'embout et faciliter des opérations d'équilibrage du profilé et le logement étant terminé par la paroi annulaire, l'embout comprenant un second logement interne cylindrique de diamètre inférieur au diamètre dudit premier logement, situé dans le prolongement de la paroi annulaire, ledit second logement étant destiné à recevoir un roulement de travail de diamètre inférieur au roulement de réglage monté serré lorsque le roulement de réglage n'est pas dans l'embout, ledit second logement étant situé entre la lèvre annulaire et la paroi annulaire, la paroi annulaire étant oblique afin de faciliter l'insertion du roulement de travail dans l'embout,
le procédé comprenant les étapes consistant à :
a) Presser dans chaque extrémité du profilé, formant rouleau de guidage, un embout jusqu'à ce que l'extrémité extérieure de l'embout formant un rebord vienne en appui contre le bord du profilé,
b) Insérer des roulements de réglage dans des premiers logements de chaque embout dimensionné pour que le roulement soit monté glissant dedans, ledit premier logement étant situé à l'intérieur de l'embout du côté de son extrémité extérieure, entre le rebord et une paroi annulaire tournée vers l'intérieur qui sert de butée au roulement de réglage,
c) Assembler les roulements de réglage sur des arbres fixes,
d) Faire tourner le profilé et mesurer les défauts d'équilibrage,
e) Désassembler le profilé des roulements de réglage, et corriger le défaut d'équilibrage par ajout de masse à l'intérieur du tube,
f) Replacer le profilé muni des embouts sur les roulements de réglage et les arbres,
g) Refaire tourner le profilé et mesurer les défauts d'équilibrage,
h) Désassembler le profilé des roulements de réglage, et corriger le défaut d'équilibrage par ajout ou suppression de masse à l'intérieur du profilé,
i) Répéter les étapes f) à h) jusqu'à ce que le défaut d'équilibrage soit réduit dans les limites tolérées,
j) Assembler les roulements de travail sur des arbres fixes,
k) Insérer un ensemble composé des roulements de travail, d'axes et de cache d'étanchéité dans des seconds logements de chaque embout dimensionné pour que le roulement soit monté serré dedans, ledit second logement étant situé à l'intérieur de l'embout du côté de son extrémité intérieure après le premier logement, entre une lèvre annulaire tournée vers l'intérieur et la paroi annulaire qui permet de guider le roulement de travail lorsqu'il est inséré dans l'embout.

L'invention concerne également un procédé d'assemblage ainsi défini, dans lequel les roulements sont insérés dans l'embout par frettage à froid.

### Brève description des figures

Les buts, objets et caractéristiques de l'invention apparaîtront plus clairement à la lecture de la description qui suit faite en référence aux dessins dans lesquels :
[Fig. 1] représente une coupe longitudinale d'un profilé équipé du dispositif de l'invention et monté sur un arbre fixe,
[Fig. 2] représente une coupe longitudinale d'un profilé équipé du dispositif de l'invention et monté sur un arbre fixe de travail,
[Fig. 3] représente une coupe longitudinale d'un profilé équipé d'une variante du dispositif de l'invention et monté sur un arbre fixe,
[Fig. 4] représente une coupe longitudinale d'un profilé équipé d'une variante du dispositif de l'invention et monté sur un arbre fixe de travail,
[Fig. 5] représente une coupe transversale du dispositif de l'invention,
[Fig. 6] représente une coupe longitudinale du dispositif de l'invention des figures 1 et 2,
[Fig. 7] représente une coupe transversale du dispositif de l'invention selon la variante des figures 3 et 4,
[Fig. 8] représente une vue en perspective du dispositif de l'invention selon la variante des figures 3, 4 et 7.

### Description détaillée de l'invention.

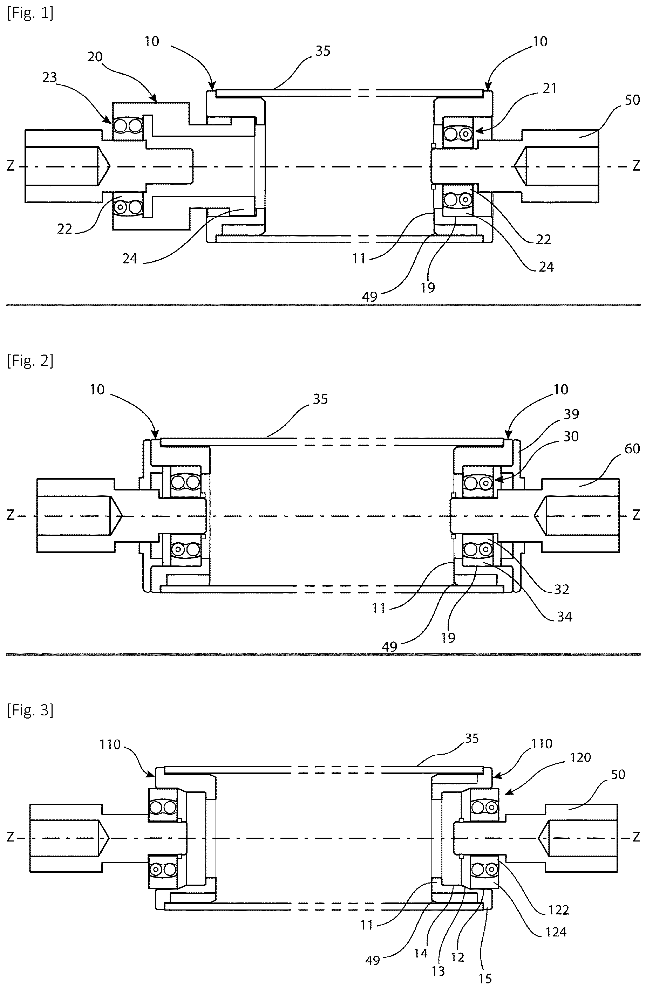

Les figures 1 à 4 représentent une coupe longitudinale d'un profilé 35 muni à ses deux extrémités de l'embout selon l'invention. Dans la suite de la description, le profilé 35 est désigné également par un tube et le terme « rouleau » désigne l'ensemble rotatif. Cependant, le profilé 35 pourrait avoir une section non circulaire sans sortir du cadre de l'invention. Le mode de réalisation principale de l'invention est illustré sur les figures 1 et 2. Chaque extrémité du tube 35 est équipée d'un embout 10 dont la majeure partie est insérée dans le tube et dont l'extrémité extérieure fait saillie radialement de façon à former un rebord 15 destiné à venir en appui contre le bord du tube 35. L'embout 10 est creux et comprend un logement 19 adapté pour contenir un organe tournant de réglage 20 ou 21 ou un organe tournant de travail 30. Le profilé 35 illustré sur la figure 1 est équipé sur son extrémité gauche de l'organe tournant de réglage 20 et sur son extrémité droite de l'organe tournant de réglage 21, mais dans la pratique les profilés sont généralement équipés d'organes tournants identiques à leurs deux extrémités. L'organe tournant de réglage est un adaptateur à roulement de réglage 20 comprenant un roulement de réglage 23 ou est un roulement de réglage 21 tandis que l'organe tournant de travail est un roulement de travail 30. Pour les deux types d'organe tournant de réglage, les roulements de réglage 21 et 23 sont destinés à tourner librement autour d'un arbre 50 d'axe longitudinal ZZ, tandis que le roulement 30 est destiné à tourner librement autour d'un arbre 60 d'axe longitudinal ZZ.

L'embout 10 comprend également une lèvre annulaire 11 du côté de l'extrémité intérieure de l'embout formant une paroi annulaire et terminale tournée vers l'intérieur et formant une butée d'arrêt contre laquelle vient en appui l'organe tournant de réglage 20 ou 21 ou l'organe tournant de travail 30. L'adaptateur à roulement de réglage 20 ou le roulement 21 ou 30 est inséré dans l'embout 10 de préférence par emmanchage en force ou par frettage à froid.

L'organe tournant de réglage et de travail sont des ensembles composés d'une bague extérieure 24, respectivement 34, d'une bague intérieure 22, respectivement 32 et d'une pluralité de billes ou similaire pour fournir une rotation à faible friction de la bague extérieure autour de la bague intérieure, la bague extérieure 24 ou 34 étant adaptée pour venir en contact avec la paroi interne du logement cylindrique 19 de l'embout 10. Le diamètre extérieur de la partie de l'organe tournant en contact avec l'embout est différent selon s'il s'agit de l'organe tournant de réglage utilisé pour l'opération d'équilibrage du rouleau ou s'il s'agit de l'organe tournant de travail utilisé lors de la mise en place du rouleau sur la machine de production. L'organe tournant de réglage est une pièce de réglage destinée à être enlevée de l'embout 10 et insérée dans l'embout 10 plusieurs fois pour permettre l'opération d'équilibrage du rouleau.

En effet, pour réaliser l'opération d'équilibrage, les embouts 10 d'extrémité sont emmanchés en force dans le tube 35, les adaptateurs à roulement de réglage 20 ou les roulements de réglage 21 sont assemblés sur les arbres fixes 50 et sont ensuite insérés dans les logements 19 de chaque embout 10. On fait tourner le tube 35 et les défauts d'équilibrage sont mesurés. Le tube est ensuite désassemblé des adaptateurs à roulement de réglage 20 ou des roulements de réglage 21, et le défaut d'équilibrage est corrigé par ajout de masse à l'intérieur du tube. Le tube muni des embouts est ensuite replacé sur les adaptateurs à roulement de réglage 20 ou les roulements de réglage 21 et les arbres 50, le tube est remis en rotation, les défauts d'équilibrage sont mesurés et corrigés de nouveau par ajout ou suppression de masse. Ces étapes sont reproduites jusqu'à ce que le défaut d'équilibrage soit réduit dans les limites tolérées. Les montages et démontages successifs du tube 35 sur les arbres 50 sont rendus possible grâce aux les adaptateurs à roulement de réglage 20 ou aux roulements de réglage 21montés glissant dans le logement cylindrique 19 des embouts 10. Lorsque le profilé ou le tube 35 est en carbone et fabriqué selon un procédé de pultrusion, le temps d'équilibrage est plus long car les rouleaux ont davantage de défauts que ceux fabriqués en aluminium ou en carbone selon un procédé de roulage ou d'enroulement filamentaire et cette facilité de démontage est indispensable.

Les dimensions de l'adaptateur à roulement de réglage 20 ou du roulement de réglage 21 utilisé pour l'opération d'équilibrage doivent permettre de monter la bague extérieure 24 glissante par rapport à l'embout 10 pour pouvoir être facilement démonté tout en fournissant un contact suffisant pour que l'embout 10 entraine la bague externe 24 de l'adaptateur à roulement de réglage 20 ou du roulement de réglage 21. De préférence, le diamètre extérieur de la partie de la bague extérieure 24 en contact avec la paroi interne du logement cylindrique 19 est tel qu'il est égal ou inférieur jusqu'à 0,1 millimètre au diamètre du logement interne cylindrique 19.

Pour les opérations de production, l'organe tournant de travail est un roulement de travail 30 dont le diamètre extérieur est supérieur de 0,1 mm à 0,2 mm au diamètre extérieur du roulement de réglage 21 ou au diamètre extérieur de la partie de la bague extérieure 24 en contact avec la paroi interne du logement cylindrique 19 de façon à permettre de monter la bague extérieure 34 du roulement de travail 30 serrée dans l'embout 10 et non pas glissant pour garantir l'entrainement de l'embout 10 par la bague externe 34 du roulement de travail 30 sans risque d'usure prématurée des liaisons. De préférence, le diamètre du roulement de travail 30 est égal ou supérieur jusqu'à 0,1 millimètre au diamètre du logement cylindrique 19.

Le roulement de travail 30 est monté sur l'arbre 60 puis mis en place dans l'embout 10 lorsque le rouleau est équilibré à son emplacement définitif de travail comme par exemple sur un cadre pour rouleau de guidage sur une machine de production. Pour cet assemblage, l'ensemble composé du roulement 30 de l'arbre fixe 60 et d'un cache d'étanchéité 39 est poussé dans l'embout dans le logement 19 jusqu'à ce qu'il soit en butée contre la lèvre annulaire 11. L'utilisation du cache d'étanchéité 39 vise à protéger les roulements de travail 30 des infiltrations de poussière ou de liquide.

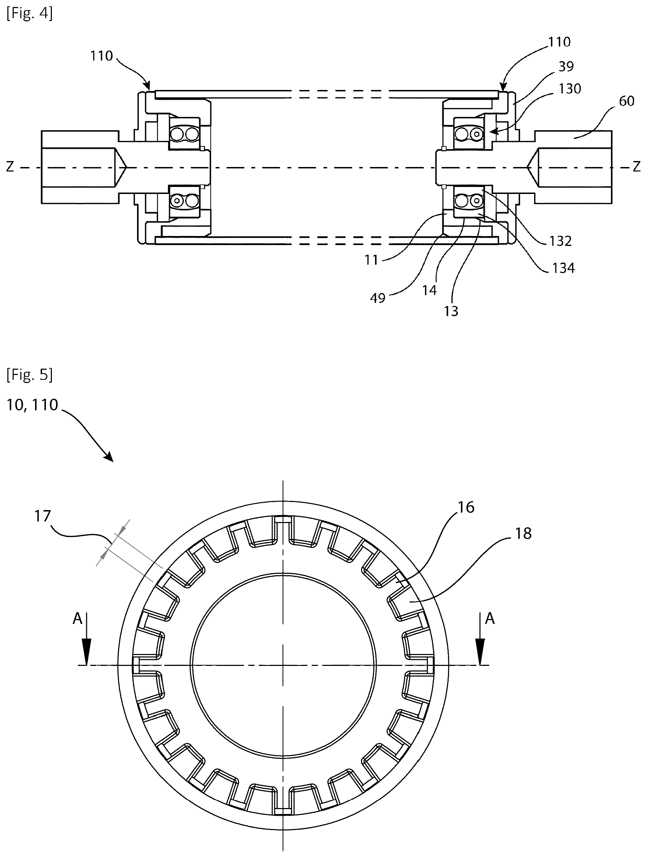

Une variante de réalisation du dispositif de l'invention est illustrée sur les figures 3 et 4 qui représentent une coupe longitudinale d'un profilé 35 muni à ses deux extrémités de l'embout selon cette variante. Chaque extrémité du profilé ou tube 35 est équipée d'un embout 110 dont la majeure partie est insérée dans le tube et dont l'extrémité extérieure fait saillie radialement de façon à former un rebord 15 destinée à venir en appui contre le bord du tube 35. L'embout 110 est creux et comprend deux logements 12 et 14 adaptés pour contenir respectivement un organe tournant de réglage 120 et un organe tournant de travail 130, l'embout ne pouvant accueillir qu'un seul des deux organes à la fois. L'organe tournant de réglage 120 est de préférence un roulement de réglage 120 et l'organe tournant de travail est de préférence un roulement de travail 130. L'embout comprend également une lèvre annulaire 11 du côté de l'extrémité intérieure de l'embout formant une paroi annulaire et terminale tournée vers l'intérieur.

Les roulements 120 et 130 sont destinés à tourner librement autour d'un arbre fixe respectivement 50 et 60 d'axe longitudinal ZZ. Les roulements 120 et 130 sont insérés dans l'embout de préférence par emmanchage en force ou par frettage à froid.

Le premier logement interne cylindrique 12 situé du côté de l'extrémité extérieure de l'embout 10 est destiné à recevoir un roulement de réglage 120 utilisé pour l'opération d'équilibrage du rouleau comme on peut le voir illustré sur la figure 3. Le roulement de réglage 120 est un ensemble composé d'une bague extérieure 124, d'une bague intérieure 122 et d'une pluralité de billes ou similaire pour fournir une rotation à faible friction de la bague extérieure autour de la bague intérieure. Les dimensions du premier logement 12 doivent permettre de monter la bague extérieure 124 du roulement de réglage 120 glissante par rapport à l'embout pour pouvoir être facilement démonté tout en fournissant un contact suffisant pour que l'embout entraine la bague externe 124 du roulement de réglage 120. De préférence, le diamètre du logement interne cylindrique 12 est égal ou supérieur jusqu'à 0,1 millimètre au diamètre extérieur du roulement de réglage. Le premier logement cylindrique 12 présente du côté de l'extrémité intérieure de l'embout une paroi annulaire 13 tournée vers l'intérieur formant une butée contre laquelle vient en appui la bague externe 124 du roulement de réglage 120. Lorsqu'il est placé dans le premier logement cylindrique 12 contre la paroi annulaire 13, le roulement de réglage 120 dépasse de l'embout 10 comme on peut le voir sur la figure 3. La longueur du premier logement 12 selon l'axe ZZ est telle que lorsque le roulement de réglage 120 est inséré dedans et en butée contre la paroi annulaire 13, la paroi cylindrique extérieur du roulement en contact avec la paroi du logement représente une bande dont la surface est comprise entre 66% et 90% de la totalité de la paroi extérieure cylindrique du roulement de réglage 120. Cette surface minimale étant nécessaire et suffisante pour garantir l'entrainement de l'embout, tout en permettant un gain de masse de l'embout. De plus, la partie du roulement située en dehors de l'embout facilite son démontage.

En effet, pour réaliser les opérations d'équilibrage, les embouts 10 d'extrémité sont emmanchés en force dans le tube 35, les roulements de réglage 120 sont ensuite insérés dans les logements 12 de chaque embout et sont assemblés sur les arbres fixes 50. On fait tourner le tube 35 et les défauts d'équilibrage sont mesurés. Le tube est ensuite désassemblé des roulements 120, et le défaut d'équilibrage est corrigé par ajout de masse à l'intérieur du tube. Le tube muni des embouts est ensuite replacé sur les roulements de réglage 120 et les arbres 50, le tube est remis en rotation, les défauts d'équilibrage sont mesurés et corrigés de nouveau par ajout ou suppression de masse. Ces étapes sont reproduites jusqu'à ce que le défaut d'équilibrage soit réduit dans les limites tolérées. Les montages et démontages successifs du tube 35 sur les arbres 50 sont rendus possibles grâce aux roulements de réglage 120 montés glissant dans le premier logement cylindrique 12 des embouts 110. Lorsque le profilé ou le tube 35 est en carbone et fabriqué selon un procédé de pultrusion, le temps d'équilibrage est plus long car les rouleaux ont davantage de défauts que ceux fabriqués en aluminium ou en carbone selon un procédé de roulage ou d'enroulement filamentaire et cette facilité de démontage est indispensable.

Le second logement cylindrique 14 est situé à l'intérieur de l'embout 110 du côté de son extrémité intérieure après le premier logement 12, entre la lèvre annulaire 11 tournée vers l'intérieur et la paroi annulaire 13. Le second logement cylindrique 14 a un diamètre inférieur au diamètre du premier logement et est destiné à recevoir un roulement de travail 130 dont le diamètre est inférieur au diamètre du roulement de réglage 120 utilisé pour les opérations d'équilibrage. De préférence, le diamètre du roulement de travail 130 est inférieur d'au moins 2 mm au diamètre du roulement de réglage 120. L'ensemble roulement de travail 130, axe fixe 60 et cache d'étanchéité 39 est mis en place dans l'embout 110 lorsque le rouleau est équilibré à son emplacement définitif de travail comme on peut le voir illustré sur la figure 4 comme par exemple sur un arbre pour rouleau de guidage. Pour cet assemblage, le roulement 130 est poussé dans l'embout et la paroi annulaire oblique 13 permet de guider le roulement 130 et évite de le positionner de travers dans le second logement 14, le roulement étant poussé dans le logement jusqu'à ce qu'il soit en butée contre la lèvre annulaire 11. Les dimensions du second logement 14 doivent permettre de monter la bague extérieure 34 du roulement de travail 130 serrée par rapport à l'embout pour garantir l'entrainement de l'embout 10 par la bague externe 34 du roulement de travail 130. De préférence, le diamètre du second logement cylindrique 14 est égal ou inférieur jusqu'à 0,1 mm, de préférence jusqu'à 0,05 mm, au diamètre extérieur du roulement de travail 130. Lorsque les roulements de travail 130 sont en place sur les arbres fixes 60, un cache d'étanchéité 35 est placé sur chaque embout 110 de façon à protéger les roulements de travail 130 des infiltrations de poussière ou de liquide.

La lèvre annulaire 11 de l'embout 110, située du côté de l'extrémité intérieure de l'embout forme une butée d'arrêt contre laquelle vient en appui le roulement de travail 130. La bague extérieure 134 du roulement de travail 130 est montée serrée dans l'embout 110 donc le roulement de travail 130 est solidaire de l'embout. La largeur du second logement cylindrique 14 est inférieure ou égale à la largeur de la paroi extérieure cylindrique du roulement de travail 130. De préférence, la longueur du second logement cylindrique 14 selon l'axe ZZ est dimensionnée de façon à ce que lorsque le roulement est placé dans son logement 14, la surface extérieure du roulement en contact avec le logement représente une bande dont la surface est comprise entre 66 et 90 % de la surface totale de la paroi extérieure du roulement de travail 130 de façon à ce que la surface en contact soit suffisante pour garantir l'entrainement tout permettant un gain de masse de l'embout.

L'embout 10 ou 110 est réalisé en matière plastique, de préférence par injection d'une matière composite composée par exemple de thermoplastique chargé de particules conductrices telles que du carbone sous forme de fibres de façon à être conducteur et à pouvoir décharger sur l'arbre fixe les charges électrostatiques qui s'accumulent sur le tube 35. Le composite peut être également composé de thermoplastique et de charges permettant d'augmenter la résistance mécanique de l'embout ou/et améliorer le comportement de l'embout lorsque les conditions thermiques varient. La charge représente entre 20 et 50 % de l'embout. De façon générale, le matériau majoritaire utilisé pour l'embout est choisi parmi des matériaux souples de façon à ce que l'embout ait un module de Young compris entre 3 et 35 GPa et de préférence compris entre 5 et 25 GPa.

L'embout 10 ou 110 a une forme extérieure correspondant sensiblement à la forme intérieure du profilé 35. Plus précisément, la section transversale interne du profilé et la section transversale de l'embout 10 ou 110 ont une empreinte de forme complémentaire afin qu'il puisse être emmanché en force et s'ajuster par frottement dans le profilé. Dans le cas d'un tube 35, l'embout 10 ou 110 a une surface extérieure de révolution qui s'inscrit dans deux tronçons cylindriques et qui comprend un court cône d'entrée qui définit une surface de guidage 49 située du côté de l'extrémité intérieure de l'embout pour faciliter son insertion dans le tube.

L'embout 10 ou 110 est illustré en détails sur la figure 5 qui représente une coupe transversale selon un plan perpendiculaire à l'axe longitudinal de symétrie ZZ. L'embout 10 ou 110 dispose sur sa face extérieure d'ailettes 16 s'étendant longitudinalement selon l'axe ZZ entre le rebord 15 et la surface de guidage 49. L'embout 10 ou 110 est suffisamment souple pour s'adapter au diamètre interne du tube qui peut être variable en cas de défaut de fabrication du tube. L'interaction entre l'embout et le tube est favorisée par la présence des ailettes. Les ailettes sont équidistantes l'une de l'autre et sont au nombre minimum de 3. Pour l'exemple illustré et pour un tube de diamètre extérieur de 40 mm et de diamètre intérieur de 36 mm, l'embout dispose de préférence de 20 ailettes 16 équidistantes l'une de l'autre et dont la face en contact avec la surface interne du tube a une largeur référencée 17 sur la figure et égale à 2 mm. La longueur de la périphérie annulaire de l'embout 10 ou 110 à l'endroit de la surface des ailettes destinée à venir en contact avec la surface interne du tube 35 est comprise entre 20 % et 90 % de la longueur totale de la périphérie annulaire dans laquelle s'inscrit l'embout à l'endroit des ailettes et est de préférence comprise entre 60 % et 80 %. De cette façon, à l'endroit des ailettes, le contact de l'embout avec le profilé est discontinu et permet ainsi une expansion latérale des ailettes lors de l'emmanchement de l'embout dans le tube, tout en limitant l'expansion radiale des ailettes qui pourrait faire éclater le profilé. Les ailettes sont séparées par des gorges 18 s'étendant longitudinalement selon l'axe ZZ dans la même direction que les ailettes. Les gorges ont une profondeur supérieure à la largeur des ailettes de façon à ce que les ailettes puissent s'aplatir lorsque l'embout est emmanché dans le tube pour fournir une liaison ferme entre le tube et l'embout, compenser les irrégularités de surface du tube et absorber les défauts d'ovalité du tube. L'embout 10 ou 110 est ainsi verrouillé par frottement dans le tube 35 tout en étant amovible. La profondeur des gorges est de préférence comprise entre 3 et 6 mm.

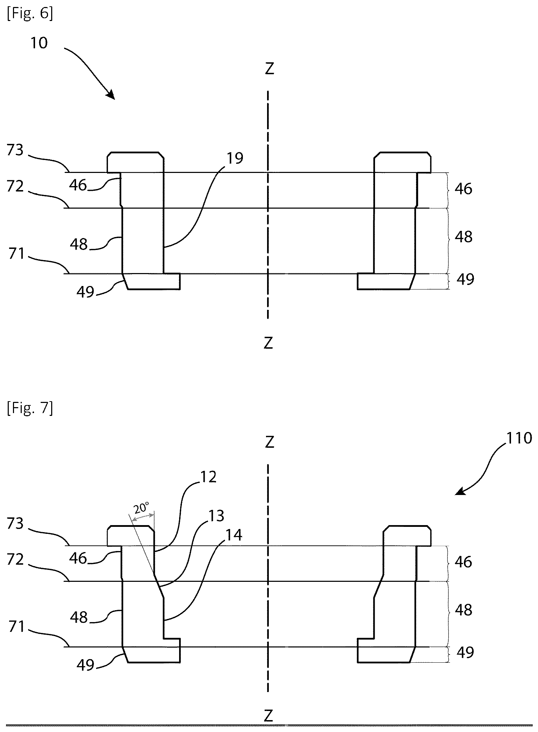

Sur les figures 6 et 7 représentant une coupe AA de la figure 5, on peut voir respectivement l'embout 10 et l'embout 110 selon une coupe longitudinale passant par l'axe de symétrie ZZ. De façon commune pour les deux embouts 10 et 100, la surface extérieure de l'embout en contact avec la surface interne du tube s'inscrit dans deux surfaces cylindriques de diamètres différents, et correspond à l'ensemble des surfaces extérieures des ailettes en contact avec le tube. Une première surface de positionnement 48 située juste après la surface de guidage 49 en forme de cône et une surface de serrage 46. La surface de positionnement 48 a un diamètre égal ou inférieur au diamètre interne du tube 35.Avantageusement, cette surface de positionnement 48 a un diamètre égal ou inférieur au diamètre interne du tube 35 d'au plus 0,3 mm et de préférence compris entre 0,05 et 0,3 mm. La surface de serrage 46 a un diamètre supérieur au diamètre interne du tube 35. De préférence, et de manière non limitative, la différence de diamètre entre la surface de serrage 46 a le diamètre interne du tube est comprise entre 0,2 et 0,4 mm. Donc la surface de serrage 46 a un diamètre supérieur au diamètre de la surface de positionnement, cette différence de diamètre est comprise entre de 0,1 mm et 0,6 mm. L'embout étant emmanché dans le tube du côté de la surface de guidage 49, la surface de positionnement 48 entre en contact en premier avec la surface interne du tube et grâce à une pression exercée constante sur l'embout, celui-ci pénètre dans le tube jusqu'à ce que la surface de serrage entre en contact avec la surface interne du tube, la pression nécessaire pour faire pénétrer l'embout dans le tube jusqu'au rebord 15 est alors augmentée. L'embout est maintenu serré dans le tube majoritairement grâce au contact de la surface de serrage contre la surface interne du tube. De cette façon, l'embout est intimement lié au tube, mais cette interconnexion n'est pas permanente et peut être démontée sans endommager le tube.

La surface de positionnement s'étend longitudinalement selon l'axe ZZ entre un premier plan transversal 71 passant par la jonction avec la surface de guidage 49 et un second plan transversal 72 passant par la jonction avec la surface de serrage. La surface de serrage s'étend longitudinalement selon l'axe ZZ entre le second plan transversal 72 et un troisième plan transversal 73 passant par le plan du rebord 15 de l'embout 110.

La surface de contact de l'organe tournant de travail donc du roulement de travail 30 et 130 avec respectivement l'embout 10 et 110, est entièrement dans la partie de l'embout située entre les premier et second plans transversaux 71 et 72 dans laquelle s'étend la surface de positionnement. La surface de contact du roulement de réglage 21 ou de l'adaptateur à roulement de réglage 20 avec l'embout 10 et la surface de contact du roulement de réglage 120 avec l'embout 110 sont entièrement dans la partie de l'embout 10 ou 110 située entre les second et troisième plans transversaux 72 et 73 dans laquelle s'étend la surface de serrage 46. Les plans transversaux 71, 72 et 73 sont perpendiculaires par rapport à l'axe de symétrie longitudinal ZZ de l'embout 110.

Dans le cas de l'embout 10 de la figure 6, quand il s'agit d'insérer le roulement de travail 30 dans l'embout, le logement 19 étant ajusté de façon à ce que le roulement de travail 30 soit monté serré à l'intérieur, le diamètre intérieur de l'embout à l'endroit du logement 19 ne doit pas subir de diminution lorsque l'embout est dans le tube pour ne pas empêcher l'insertion du roulement de travail 30. Ce but est atteint grâce au diamètre extérieur de l'embout égal ou inférieur au diamètre interne du tube 35 d'au plus 0,1 mm entre les plans transversaux 71 et 72 c'est-à-dire au niveau de la surface de positionnement 48 qui permet une légère expansion de l'embout 10 vers l'extérieur sans risque d'endommager le tube. Lorsque le roulement de travail 30 est inséré dans le logement 19 de l'embout 10, l'effort exercé par l'embout sur le tube au niveau de la surface de positionnement est réduit du fait de la diminution du diamètre externe de l'embout au niveau de cette surface et parce que l'épaisseur de l'embout augmente à l'endroit du logement 19 augmentant sa rigidité annulaire.

Dans le cas de l'embout 110 illustré sur le figure 7, l'effort exercé par l'embout sur le tube au niveau de la surface de serrage peut entrainer une légère diminution du diamètre intérieur de l'embout à l'endroit du logement 12 situé entre les plans transversaux 72 et 73. Cette diminution du diamètre intérieur de l'embout est rendue possible grâce à l'épaisseur de l'embout et de sa souplesse et préserve le tube de l'éclatement. D'autre part, cette légère diminution du diamètre intérieure n'empêche pas l'insertion du roulement de réglage 120 monté glissant dans le logement 12.

De même, quand il s'agit d'insérer le roulement de travail 130 dans l'embout 110, le logement 14 étant ajusté de façon à ce que le roulement de travail soit monté serré à l'intérieur, le diamètre intérieur de l'embout à l'endroit du logement 14 ne doit pas subir de diminution lorsque l'embout est dans le tube pour ne pas empêcher l'insertion du roulement de travail 130. Ce but est atteint grâce au diamètre extérieur de l'embout égal ou inférieur au diamètre interne du tube 35 d'au plus 0,1 mm entre les plans transversaux 71 et 72 c'est-à-dire au niveau de la surface de positionnement 48 qui permet une légère expansion de l'embout vers l'extérieur sans risque d'endommager le tube. Même lorsque le roulement de travail 130 est inséré dans le second logement 14 de l'embout 110, l'effort exercé par l'embout sur le tube au niveau de la surface de positionnement est réduit du fait de la diminution du diamètre externe de l'embout au niveau de cette surface et parce que l'épaisseur de l'embout augmente à l'endroit du logement 14 augmentant sa rigidité annulaire.

Il est en effet important que l'effort radial soit réduit afin de préserver le tube de l'éclatement. En effet, lorsque le tube est en carbone et fabriqué à partir d'un procédé de pultrusion il est majoritairement constitué de fibres de carbone dirigées dans le sens longitudinal (entre 60 et 80% de fibres dans le sens longitudinal), ce qui le rend fragile dans des plans transversaux. En effet, la résistance à l'éclatement d'un tube en carbone fabriqué selon un procédé de pultrusion est deux à trois fois inférieures à la résistance à l'éclatement d'un tube en carbone de mêmes dimensions fabriqué par un procédé d'enroulement filamentaire ou par un procédé de roulage qui permet d'enrouler plus de fibre quasi radialement à l'axe du tube (entre 60 et 90° par rapport à l'axe longitudinal du tube). L'effort radial est réduit également grâce à la souplesse de l'embout 10 ou 110 et à la présence d'ailettes qui permettent d'absorber une partie des contraintes appliquées sur le profilé.

D'autre part, lorsque le roulement est inséré par frettage dans le profilé 35, grâce aux ailettes de l'embout 10 ou 110, la section du profilé à l'endroit de l'embout a une forme qui épouse la forme polygonale de la section de l'embout à l'endroit des ailettes. Par conséquent l'allongement du profilé est inférieur à ce qu'il serait sur un embout rigide et de section circulaire pleine. Ainsi lors du montage des roulements 120 ou 130 par frettage, il n'y a pas endommagement du roulement ni de l'embout.

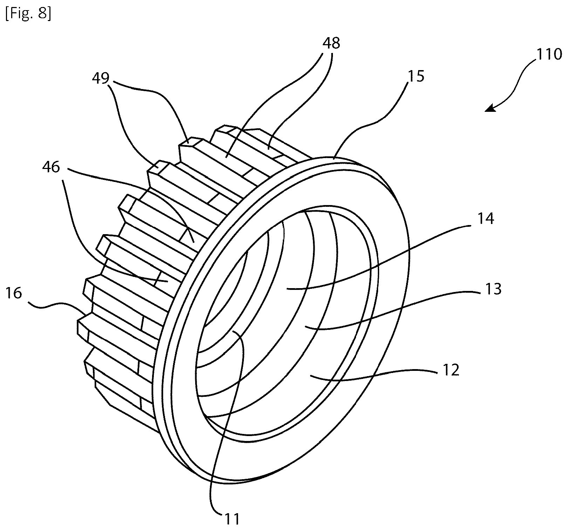

Selon la figure 8, qui est une vue en perspective de l'embout 110, on peut voir sur la surface extérieure de l'embout, l'emplacement des parties des surfaces de serrage 46 et de positionnement 48 sur les ailettes 16 ainsi que la paroi annulaire 49 de chaque ailette. À l'intérieur de l'embout, le côté interne de l'embout se termine par la lèvre annulaire 11. Ces caractéristiques sont communes avec l'embout 10. Par contre, les caractéristiques à l'intérieur de l'embout telles que les logements 12 et 14, la paroi annulaire oblique 13, sont spécifiques à l'embout 110. Quel que soit le diamètre du tube 35, par exemple pour un tube 35 de diamètre intérieur 60 mm, les dimensions des parties à l'intérieur de l'embout 10 ou 110 sont les mêmes que pour l'embout adapté pour un tube de diamètre intérieur 36 mm. Le diamètre extérieur de l'embout sera adapté au diamètre intérieur du tube par une augmentation de l'épaisseur de la paroi de l'embout.

L'embout 10 ou 110 selon l'invention est particulièrement adapté pour être assemblé sur des profilés servant de rouleau de guidage utilisés par exemple dans des machines de transformation du film plastique, ou bien dans des machines de fabrication de tissu ou sur tout autre rouleau de guidage.

En fonctionnement, un rouleau de guidage peut subir des gradients de température importants de l'ordre de 60 °C et l'embout 10 ou 110 permet, grâce à sa souplesse et à ses ailettes, d'absorber la dilatation thermique due à la contrainte différentielle entre les matériaux.

L'embout 10 ou 110 selon l'invention est de préférence encollé avant d'être inséré dans le tube pour sécuriser l'embout, mais le collage réalisé n'est pas un collage structurel, ainsi il évite l'étape de préparation des surfaces de collage et autorise le désassemblage de l'embout sans arrachement de matière. L'utilisation d'un embout en composite injecté associé à un profilé fabriqué par pultrusion permet d'alléger l'ensemble des pièces, et de réduire les coûts de production. D'autre part, l'allègement des pièces a un impact sur la performance du rouleau, en effet cela réduit son inertie, rend l'équilibrage plus fin et permet l'augmentation de la longueur maximale utilisable pour une section donnée du profilé. L'embout selon l'invention permet un gain de poids compris entre 60 et 75 % par rapport à un embout en aluminium.

Enfin, l'embout selon l'invention augmente la durée de vie des rouleaux et permet leur traitement et leur recyclage en fin de vie.

## Revendications

1. Embout (10, 110) destiné à un profilé (35) se présentant sous la forme d'un tube de section interne circulaire d'axe longitudinal ZZ délimité longitudinalement par une extrémité dite intérieure d'embout, prévue pour s'étendre à l'intérieur du profilé, et une extrémité dite extérieure d'embout, et dont les dimensions sont adaptées pour lui permettre d'être emmanché en force depuis l'extrémité intérieure à l'intérieur d'une extrémité de ce profilé, ledit embout comprenant au moins un logement interne cylindrique (12, 14, 19) destiné à recevoir un organe tournant de réglage (20, 21, 120) ou un organe tournant de travail (30, 130) pour monter le profilé en rotation sur un arbre fixe (50, 60), et ledit logement étant délimité par une paroi (11, 13) tournée vers l'intérieur formant une butée pour ledit organe tournant de réglage ou ledit organe tournant de travail ;
dans lequel l'embout est souple et comprend sur sa surface extérieure une pluralité d'ailettes (16) faisant saillie vers l'extérieur et s'étendant longitudinalement selon l'axe ZZ d'un bord interne de l'embout en direction d'un bord externe de l'embout, lesdites ailettes étant séparées par des gorges (18) s'étendant longitudinalement selon l'axe ZZ dans la même direction que les ailettes ; et
**caractérisé en ce que**
les surfaces extérieures des ailettes de la surface extérieure de l'embout, adaptées pour être en contact avec la surface interne du profilé (35), sont conformées pour définir, dans le sens défini depuis l'extrémité intérieure d'embout vers l'extrémité extérieur d'embout, une surface de positionnement (48) et une surface de serrage (46), ladite surface de positionnement (48) étant située juste après une surface de guidage (49) en forme de cône située du côté de l'extrémité intérieure de l'embout, les surfaces de positionnement (48) et de serrage (46) étant inscrites dans deux surfaces cylindriques de diamètre différents, ladite surface de positionnement étant conformée pour présenter un diamètre égal ou inférieur au diamètre interne du profilé (35) et ladite surface de serrage étant conformée pour présenter un diamètre supérieur au diamètre interne du profilé (35).

2. Embout (10, 110) selon la revendication 1, dans lequel :
- la surface de positionnement est conformée pour présenter un diamètre égal ou inférieur au diamètre interne du profilé (35) d'au plus 0,1 mm ; et
- la surface de serrage est conformée pour présenter un diamètre supérieur au diamètre interne du profilé (35) d'une valeur comprise entre 0,2 et 0,4 mm.

3. Embout (10, 110) selon la revendication 1 ou 2, dans lequel la longueur de la périphérie de l'embout le long d'une section transversale et à l'endroit de la surface desdites ailettes destinée à venir en contact avec la surface interne du profilé (35) correspond entre 20 % et 90 % à la longueur de la périphérie totale de la section dans laquelle s'inscrit l'embout de façon à ce que le contact de l'embout avec le profilé soit discontinu.

4. Embout (10, 110) selon l'une quelconque des revendications 1 à 3, dans lequel la profondeur des gorges (18) est supérieure à la largeur (17) des ailettes (16).

5. Embout (10, 110) selon l'une quelconque des revendications 1 à 4 comprenant sur son extrémité extérieure un rebord (15) destiné à venir en appui contre le bord du profilé (35).

6. Embout (10, 110) selon l'une quelconque des revendications 1 à 5, comportant :
- une paroi annulaire oblique (13) tournée vers l'intérieur et une lèvre annulaire (11) du côté de l'extrémité intérieure de l'embout formant une paroi annulaire et terminale tournée vers l'intérieur;
- un premier logement interne cylindrique (12) destiné à recevoir un roulement de réglage (120), ledit roulement de réglage étant monté glissant pour faciliter son démontage hors de l'embout et faciliter des opérations d'équilibrage du profilé et le logement (12) étant terminé par la paroi annulaire (13), l'embout comprenant un second logement interne cylindrique (14) de diamètre inférieur au diamètre dudit premier logement (12), situé dans le prolongement de la paroi annulaire (13), ledit second logement étant destiné à recevoir un roulement de travail (130) de diamètre inférieur au roulement de réglage (120) monté serré lorsque le roulement de réglage (120) n'est pas dans l'embout, ledit second logement étant situé entre la lèvre annulaire (11) et la paroi annulaire (13), la paroi annulaire (13) étant oblique afin de faciliter l'insertion du roulement de travail (130) dans l'embout.

7. Embout (10, 110) selon l'une quelconque des revendications 1 à 6, fabriqué par injection de composite tel que du thermoplastique chargé de particules conductrices.

8. Embout (10, 110) selon l'une quelconque des revendications 1 à 7, composé majoritairement d'un matériau souple dont le module de Young est compris entre 3 et 40 GPa et de préférence est compris entre 5 et 25 GPa.

9. Ensemble comprenant au moins un embout (10, 110) selon l'une quelconque des revendications 1 à 7 et un profilé se présentant sous la forme d'un tube de section interne circulaire d'axe longitudinal ZZ, l'embout (10, 110) étant emmanché en force à l'intérieur d'une extrémité du profilé, l'ensemble comprenant en outre au moins un organe tournant de travail (30, 130) et au moins un organe tournant de réglage (20, 21, 120).

10. Ensemble selon la revendication 9, dans lequel la surface de contact de l'organe tournant de travail (30, 130) avec l'embout est entièrement dans la partie de l'embout située entre un premier et second plans transversaux (71) et (72) dans laquelle s'étend longitudinalement selon l'axe ZZ la surface de positionnement (48), les premier et second plans transversaux (71) et (72) étant perpendiculaires par rapport à l'axe de symétrie longitudinal ZZ de l'embout (10, 110).

11. Ensemble selon la revendication 9 ou 10, dans lequel l'organe tournant de travail est un roulement de travail (30, 130).

12. Ensemble selon la revendication 9, dans lequel l'organe tournant de réglage est un adaptateur à roulement de réglage (20) ou un roulement de réglage (21 ; 120).

13. Ensemble selon la revendication l'une quelconque des revendications 9 à 12, dans lequel est inséré :
- soit l'adaptateur à roulement de réglage (20) ou le roulement de réglage (21) destiné à être utilisé pour l'opération d'équilibrage d'un rouleau, l'adaptateur à roulement de réglage (20) et le roulement de réglage (21) comportant une bague extérieure (24), le diamètre de la partie de la bague extérieure (24) en contact avec la paroi interne du logement cylindrique (19) étant égal ou inférieur jusqu'à 0,1 mm au diamètre du logement interne cylindrique (19) afin d'être monté glissant,
- soit le roulement de travail (30) destiné à être utilisé sur une machine de production, le roulement de travail ayant un diamètre extérieur égal ou supérieur jusqu'à 0,1 mm au diamètre du logement interne cylindrique (19) afin d'être monté serré.

14. Ensemble selon la revendication 13, dans lequel la longueur du premier logement (12) selon l'axe ZZ est telle que lorsque le roulement de réglage (120) est inséré dedans et en butée contre la paroi annulaire (13), la paroi cylindrique extérieure du roulement de réglage (120) en contact avec la paroi du logement est une bande dont la surface est comprise entre 66% et 90% de la totalité de la paroi extérieure cylindrique du roulement de réglage (120).

15. Ensemble selon la revendication 13 ou 14, dans lequel la surface de contact du roulement de réglage (120) avec l'embout est entièrement dans la partie de l'embout située entre le second plan transversal (72) et un troisième plan transversal (73) dans laquelle s'étend longitudinalement selon l'axe ZZ la surface de serrage (46), le plan transversal (73) étant perpendiculaires par rapport à l'axe de symétrie longitudinal ZZ de l'embout (110).

16. Ensemble selon la revendication 13, 14 ou 15, dans lequel le diamètre du premier logement (12) destiné à recevoir le roulement de réglage (120) est égal ou supérieur jusqu'à 0,1 mm au diamètre extérieur du roulement de réglage (120) tandis que le diamètre du second logement (14) destiné à recevoir le roulement de travail (130) est égal ou inférieur jusqu'à 0,1 mm et de préférence jusqu'à 0,05 mm au diamètre extérieur du roulement de travail (130).

17. Ensemble selon l'une des revendications 13 à 16, dans lequel le diamètre du roulement de travail (130) est inférieur d'au moins 2 mm au diamètre du roulement de réglage (120).

18. Ensemble selon l'une des revendications 8 à 17, dans lequel le profilé (35) est en carbone, est fabriqué selon un procédé de pultrusion et comprend entre 60 % et 80% de fibres dans le sens longitudinal.

19. Procédé d'assemblage d'un cadre de travail à arbres fixes (60) et rouleau de guidage pour machine de transformation ou de production de films plastiques au moyen d'un ensemble selon l'une quelconque des revendications 9 à 18 prise en combinaison avec la revendication 6, qui comprend les étapes consistant à :
a) Presser dans chaque extrémité du profilé (35), formant rouleau de guidage, un embout (110) jusqu'à ce que l'extrémité extérieure de l'embout (110) formant un rebord (15) vienne en appui contre le bord du profilé (35),
b) Insérer des roulements de réglage (120) dans des premiers logements (12) de chaque embout (110) dimensionné pour que le roulement (120) soit monté glissant dedans, ledit premier logement (12) étant situé à l'intérieur de l'embout (110) du côté de son extrémité extérieure, entre le rebord (15) et une paroi annulaire (13) tournée vers l'intérieur qui sert de butée au roulement de réglage (120),
c) Assembler les roulements de réglage (120) sur des arbres fixes (50),
d) Faire tourner le profilé (35) et mesurer les défauts d'équilibrage,
e) Désassembler le profilé des roulements de réglage (120), et corriger le défaut d'équilibrage par ajout de masse à l'intérieur du tube,
f) Replacer le profilé muni des embouts sur les roulements de réglage (120) et les arbres (50),
g) Refaire tourner le profilé (35) et mesurer les défauts d'équilibrage,
h) Désassembler le profilé des roulements de réglage (120), et corriger le défaut d'équilibrage par ajout ou suppression de masse à l'intérieur du profilé,
i) Répéter les étapes f) à h) jusqu'à ce que le défaut d'équilibrage soit réduit dans les limites tolérées,
j) Assembler les roulements de travail (130) sur des arbres fixes (60),
k) Insérer un ensemble composé des roulements de travail (130), d'axes (60) et de cache d'étanchéité (39) dans des seconds logements (14) de chaque embout (110) dimensionné pour que le roulement (130) soit monté serré dedans, ledit second logement (14) étant situé à l'intérieur de l'embout (110) du côté de son extrémité intérieure après le premier logement (12), entre une lèvre annulaire (11) tournée vers l'intérieur et la paroi annulaire (13) qui permet de guider le roulement de travail (130) lorsqu'il est inséré dans l'embout.

20. Procédé d'assemblage selon la revendication 19, dans lequel les roulements (120, 130) sont insérés dans l'embout (110) par frettage à froid.

## Patentansprüche

1. Endstück (10, 110), bestimmt für ein Profil (35), das sich in Form eines Rohrs mit kreisförmigem Innenquerschnitt mit einer Längsachse ZZ darstellt, das in Längsrichtung begrenzt ist durch ein als inneres Ende des Endstücks bezeichnetes Ende, das vorgesehen ist, um sich in das Innere des Profils zu erstrecken, und ein als äußeres Ende des Endstücks bezeichnetes Ende, und dessen Abmessungen angepasst sind, um es ihm zu ermöglichen, vom inneren Ende her in das Innere eines Endes dieses Profils eingepresst zu werden, wobei das Endstück mindestens eine zylindrische Innenaufnahme (12, 14, 19) umfasst, die zur Aufnahme eines Einstell-Drehorgans (20, 21, 120) oder eines Arbeits-Drehorgans (30, 130) bestimmt ist, um das Profil drehbar auf einer festen Welle (50, 60) zu montieren, und wobei die Aufnahme durch eine nach innen gerichtete Wand (11, 13) begrenzt ist, die einen Anschlag für das Einstell-Drehorgan oder das Arbeits-Drehorgan bildet;
wobei das Endstück flexibel ist und auf seiner Außenfläche eine Vielzahl von Rippen (16) umfasst, die nach außen vorstehen und sich in Längsrichtung entlang der Achse ZZ von einer Innenkante des Endstücks in Richtung einer Außenkante des Endstücks erstrecken,
wobei die Rippen durch Rillen (18) getrennt sind, die sich in Längsrichtung entlang der Achse ZZ in derselben Richtung wie die Rippen erstrecken; und
**dadurch gekennzeichnet, dass**
die Außenflächen der Rippen der Außenfläche des Endstücks, die angepasst sind, um mit der Innenfläche des Profils (35) in Kontakt zu sein, geformt sind, um in der von dem inneren Ende des Endstücks zum äußeren Ende des Endstücks definierten Richtung eine Positionierungsfläche (48) und eine Klemmfläche (46) zu definieren, wobei die Positionierungsfläche (48) unmittelbar nach einer kegelstumpfförmigen Führungsfläche (49) angeordnet ist, die sich auf der Seite des inneren Endes des Endstücks befindet, wobei die Positionierungsfläche (48) und die Klemmfläche (46) in zwei zylindrische Flächen unterschiedlicher Durchmesser eingeschrieben sind, wobei die Positionierungsfläche so geformt ist, dass sie einen Durchmesser aufweist, der gleich oder kleiner als der Innendurchmesser des Profils (35) ist, und die Klemmfläche so geformt ist, dass sie einen Durchmesser aufweist, der größer als der Innendurchmesser des Profils (35) ist.

2. Endstück (10, 110) nach Anspruch 1, wobei:
- die Positionierungsfläche so geformt ist, dass sie einen Durchmesser aufweist, der gleich oder kleiner als der Innendurchmesser des Profils (35) um höchstens 0,1 mm ist; und
- die Klemmfläche so geformt ist, dass sie einen Durchmesser aufweist, der größer als der Innendurchmesser des Profils (35) um einen Wert zwischen 0,2 und 0,4 mm ist.

3. Endstück (10, 110) nach Anspruch 1 oder 2, wobei die Länge des Umfangs des Endstücks entlang eines Querschnitts und an der Stelle der Fläche der Rippen, die dazu bestimmt ist, mit der Innenfläche des Profils (35) in Kontakt zu kommen, zwischen 20 % und 90 % der Länge des Gesamtumfangs des Querschnitts entspricht, in den das Endstück eingeschrieben ist, sodass der Kontakt des Endstücks mit dem Profil diskontinuierlich ist.

4. Endstück (10, 110) nach einem der Ansprüche 1 bis 3, wobei die Tiefe der Rillen (18) größer als die Breite (17) der Rippen (16) ist.

5. Endstück (10, 110) nach einem der Ansprüche 1 bis 4, das an seinem äußeren Ende einen Rand (15) umfasst, der dazu bestimmt ist, gegen den Rand des Profils (35) anzuliegen.

6. Endstück (10, 110) nach einem der Ansprüche 1 bis 5, umfassend:
- eine schräge ringförmige Wand (13), die nach innen gerichtet ist, und eine ringförmige Lippe (11) auf der Seite des inneren Endes des Endstücks, die eine ringförmige und terminale, nach innen gerichtete Wand bildet;
- eine erste zylindrische Innenaufnahme (12), die zur Aufnahme eines Einstelllagers (120) bestimmt ist, wobei das Einstelllager gleitend montiert ist, um seinen Ausbau aus dem Endstück und die Auswuchtarbeiten des Profils zu erleichtern, und die Aufnahme (12) durch die ringförmige Wand (13) abgeschlossen ist, wobei das Endstück eine zweite zylindrische Innenaufnahme (14) mit einem Durchmesser umfasst, der kleiner als der Durchmesser der ersten Aufnahme (12) ist und in der Verlängerung der ringförmigen Wand (13) liegt, wobei die zweite Aufnahme zur Aufnahme eines Arbeitslagers (130) bestimmt ist, dessen Durchmesser kleiner als der des Einstelllagers (120) ist und das fest eingepresst wird, wenn das Einstelllager (120) sich nicht im Endstück befindet, wobei die zweite Aufnahme zwischen der ringförmigen Lippe (11) und der ringförmigen Wand (13) angeordnet ist und die ringförmige Wand (13) schräg ist, um das Einführen des Arbeitslagers (130) in das Endstück zu erleichtern.

7. Endstück (10, 110) nach einem der Ansprüche 1 bis 6, hergestellt durch Spritzgießen von Verbundwerkstoff, wie z. B. Thermoplast gefüllt mit leitfähigen Partikeln.

8. Endstück (10, 110) nach einem der Ansprüche 1 bis 7, überwiegend aus einem flexiblen Werkstoff zusammengesetzt, dessen Elastizitätsmodul zwischen 3 und 40 GPa und vorzugsweise zwischen 5 und 25 GPa liegt.

9. Baugruppe, umfassend mindestens ein Endstück (10, 110) nach einem der Ansprüche 1 bis 7 und ein Profil, das sich in Form eines Rohrs mit kreisförmigem Innenquerschnitt mit einer Längsachse ZZ darstellt, wobei das Endstück (10, 110) in das Innere eines Endes des Profils eingepresst ist, wobei die Baugruppe ferner mindestens ein Arbeits-Drehorgan (30, 130) und mindestens ein Einstell-Drehorgan (20, 21, 120) umfasst.

10. Baugruppe nach Anspruch 9, wobei die Kontaktfläche des Arbeits-Drehorgans (30, 130) mit dem Endstück vollständig in dem Teil des Endstücks liegt, der zwischen einer ersten und einer zweiten Querebene (71) und (72) liegt, in der sich die Positionierungsfläche (48) in Längsrichtung entlang der Achse ZZ erstreckt, wobei die erste und die zweite Querebene (71) und (72) senkrecht zur Längssymmetrieachse ZZ des Endstücks (10, 110) stehen.

11. Baugruppe nach Anspruch 9 oder 10, wobei das Arbeits-Drehorgan ein Arbeitslager (30, 130) ist.

12. Baugruppe nach Anspruch 9, wobei das Einstell-Drehorgan ein Einstelllager-Adapter (20) oder ein Einstelllager (21; 120) ist.

13. Baugruppe nach einem der Ansprüche 9 bis 12, wobei eingesetzt ist:
- entweder der Einstelllager-Adapter (20) oder das Einstelllager (21), das für die Auswuchtung einer Walze bestimmt ist, wobei der Einstelllager-Adapter (20) und das Einstelllager (21) einen Außenring (24) umfassen und der Durchmesser des Teils des Außenrings (24), der mit der Innenwand der zylindrischen Aufnahme (19) in Kontakt steht, gleich oder kleiner um bis zu 0,1 mm als der Durchmesser der zylindrischen Innenaufnahme (19) ist, um gleitend montiert zu werden,
- oder das Arbeitslager (30), das zur Verwendung auf einer Produktionsmaschine bestimmt ist, wobei das Arbeitslager einen Außendurchmesser aufweist, der gleich oder größer um bis zu 0,1 mm als der Durchmesser der zylindrischen Innenaufnahme (19) ist, um fest eingepresst zu werden.

14. Baugruppe nach Anspruch 13, wobei die Länge der ersten Aufnahme (12) entlang der Achse ZZ derart ist, dass, wenn das Einstelllager (120) darin eingesetzt und gegen die ringförmige Wand (13) anstoßend ist, die zylindrische Außenwand des Einstelllagers (120), die mit der Wand der Aufnahme in Kontakt steht, ein Band darstellt, dessen Fläche zwischen 66 % und 90 % der Gesamtfläche der zylindrischen Außenwand des Einstelllagers (120) beträgt.

15. Baugruppe nach Anspruch 13 oder 14, wobei die Kontaktfläche des Einstelllagers (120) mit dem Endstück vollständig in dem Teil des Endstücks liegt, der zwischen der zweiten Querebene (72) und einer dritten Querebene (73) liegt, in der sich die Klemmfläche (46) in Längsrichtung entlang der Achse ZZ erstreckt, wobei die Querebene (73) senkrecht zur Längssymmetrieachse ZZ des Endstücks (110) steht.

16. Baugruppe nach Anspruch 13, 14 oder 15, wobei der Durchmesser der ersten Aufnahme (12), die zur Aufnahme des Einstelllagers (120) bestimmt ist, gleich oder größer um bis zu 0,1 mm als der Außendurchmesser des Einstelllagers (120) ist, während der Durchmesser der zweiten Aufnahme (14), die zur Aufnahme des Arbeitslagers (130) bestimmt ist, gleich oder kleiner um bis zu 0,1 mm und vorzugsweise um bis zu 0,05 mm als der Außendurchmesser des Arbeitslagers (130) ist.

17. Baugruppe nach einem der Ansprüche 13 bis 16, wobei der Durchmesser des Arbeitslagers (130) um mindestens 2 mm kleiner als der Durchmesser des Einstelllagers (120) ist.

18. Baugruppe nach einem der Ansprüche 8 bis 17, wobei das Profil (35) aus Kohlenstoff besteht, nach einem Pultrusionsverfahren hergestellt ist und zwischen 60 % und 80 % Fasern in Längsrichtung umfasst.

19. Montageverfahren eines Arbeitsrahmens mit festen Wellen (60) und einer Führungswalze für eine Verarbeitungs- oder Kunststofffolien-Produktionsmaschine mittels einer Baugruppe nach einem der Ansprüche 9 bis 18, in Kombination mit Anspruch 6, das die folgenden Schritte umfasst:
a) Einpressen in jedes Ende des Profils (35), das eine Führungswalze bildet, eines Endstücks (110), bis das äußere Ende des Endstücks (110), das einen Rand (15) bildet, gegen den Rand des Profils (35) anliegt,
b) Einsetzen von Einstelllagern (120) in die ersten Aufnahmen (12) jedes Endstücks (110), die so dimensioniert sind, dass das Lager (120) gleitend darin montiert ist, wobei die erste Aufnahme (12) im Inneren des Endstücks (110) auf der Seite seines äußeren Endes zwischen dem Rand (15) und einer nach innen gerichteten ringförmigen Wand (13) liegt, die als Anschlag für das Einstelllager (120) dient,
c) Montieren der Einstelllager (120) auf festen Wellen (50),
d) Drehen des Profils (35) und Messen der Auswuchtfehler,
e) Demontieren des Profils von den Einstelllagern (120) und Korrigieren des Auswuchtfehlers durch Hinzufügen von Masse im Inneren des Rohrs,
f) Wiederaufsetzen des mit Endstücken versehenen Profils auf die Einstelllager (120) und die Wellen (50),
g) Erneutes Drehen des Profils (35) und Messen der Auswuchtfehler,
h) Demontieren des Profils von den Einstelllagern (120) und Korrigieren des Auswuchtfehlers durch Hinzufügen oder Entfernen von Masse im Inneren des Profils,
i) Wiederholen der Schritte f) bis h), bis der Auswuchtfehler innerhalb der tolerierten Grenzen reduziert ist,
j) Montieren der Arbeitslager (130) auf festen Wellen (60),
k) Einsetzen einer Baugruppe, bestehend aus den Arbeitslagern (130), Wellen (60) und Dichtungskappe (39), in die zweiten Aufnahmen (14) jedes Endstücks (110), die so dimensioniert sind, dass das Lager (130) fest darin eingepresst ist, wobei die zweite Aufnahme (14) im Inneren des Endstücks (110) auf der Seite seines inneren Endes nach der ersten Aufnahme (12) zwischen einer nach innen gerichteten ringförmigen Lippe (11) und der ringförmigen Wand (13) liegt, die das Arbeitslager (130) beim Einsetzen in das Endstück führt.

20. Montageverfahren nach Anspruch 19, wobei die Lager (120, 130) durch Kaltschrumpfen in das Endstück (110) eingesetzt werden.

## Claims

1. End piece (10, 110) intended for a profile (35) having the form of a tube of circular internal cross-section with a longitudinal axis ZZ delimited longitudinally by an end referred to as the inner end of the end piece, intended to extend inside the profile, and an end referred to as the outer end of the end piece, and whose dimensions are adapted to allow it to be press-fitted from the inner end inside one end of this profile, said end piece comprising at least one cylindrical internal housing (12, 14, 19) intended to receive an adjustment rotating member (20, 21, 120) or a working rotating member (30, 130) for mounting the profile in rotation on a fixed shaft (50, 60), and said housing being delimited by a wall (11, 13) facing inwards forming a stop for said adjustment rotating member or said working rotating member;
in which the end piece is flexible and comprises on its outer surface a plurality of fins (16) protruding outwards and extending longitudinally along the axis ZZ from an inner edge of the end piece in the direction of an outer edge of the end piece,
said fins being separated by grooves (18) extending longitudinally along the axis ZZ in the same direction as the fins; and
**characterised in that**
the outer surfaces of the fins of the outer surface of the end piece, adapted to be in contact with the internal surface of the profile (35), are shaped to define, in the direction defined from the inner end of the end piece towards the outer end of the end piece, a positioning surface (48) and a clamping surface (46), said positioning surface (48) being located just after a cone-shaped guiding surface (49) located on the side of the inner end of the end piece, the positioning (48) and clamping (46) surfaces being inscribed in two cylindrical surfaces of different diameters, said positioning surface being shaped to have a diameter equal to or smaller than the internal diameter of the profile (35) and said clamping surface being shaped to have a diameter greater than the internal diameter of the profile (35).

2. End piece (10, 110) according to claim 1, in which:
- the positioning surface is shaped to have a diameter equal to or smaller than the internal diameter of the profile (35) by at most 0.1 mm; and
- the clamping surface is shaped to have a diameter greater than the internal diameter of the profile (35) by a value comprised between 0.2 and 0.4 mm.

3. End piece (10, 110) according to claim 1 or 2, in which the length of the periphery of the end piece along a cross-section and at the location of the surface of said fins intended to come into contact with the internal surface of the profile (35) corresponds to between 20% and 90% of the length of the total periphery of the section in which the end piece is inscribed so that the contact of the end piece with the profile is discontinuous.

4. End piece (10, 110) according to any one of claims 1 to 3, in which the depth of the grooves (18) is greater than the width (17) of the fins (16).

5. End piece (10, 110) according to any one of claims 1 to 4 comprising on its outer end a rim (15) intended to bear against the edge of the profile (35).

6. End piece (10, 110) according to any one of claims 1 to 5, comprising:
- an oblique annular wall (13) facing inwards and an annular lip (11) on the side of the inner end of the end piece forming a terminal annular wall facing inwards;
- a first cylindrical internal housing (12) intended to receive an adjustment bearing (120), said adjustment bearing being slidingly mounted to facilitate its removal from the end piece and to facilitate balancing operations of the profile and the housing (12) being terminated by the annular wall (13), the end piece comprising a second cylindrical internal housing (14) of diameter smaller than the diameter of said first housing (12), located in the extension of the annular wall (13), said second housing being intended to receive a working bearing (130) of diameter smaller than the adjustment bearing (120) tight-fitted when the adjustment bearing (120) is not in the end piece, said second housing being located between the annular lip (11) and the annular wall (13), the annular wall (13) being oblique in order to facilitate the insertion of the working bearing (130) in the end piece.

7. End piece (10, 110) according to any one of claims 1 to 6, manufactured by injection of composite such as thermoplastic filled with conductive particles.

8. End piece (10, 110) according to any one of claims 1 to 7, composed predominantly of a flexible material whose Young's modulus is comprised between 3 and 40 GPa and preferably comprised between 5 and 25 GPa.

9. Assembly comprising at least one end piece (10, 110) according to any one of claims 1 to 7 and a profile having the form of a tube of circular internal cross-section with a longitudinal axis ZZ, the end piece (10, 110) being press-fitted inside one end of the profile, the assembly further comprising at least one working rotating member (30, 130) and at least one adjustment rotating member (20, 21, 120).

10. Assembly according to claim 9, in which the contact surface of the working rotating member (30, 130) with the end piece is entirely in the part of the end piece located between a first and second transverse planes (71) and (72) in which the positioning surface (48) extends longitudinally along the axis ZZ, the first and second transverse planes (71) and (72) being perpendicular to the longitudinal axis of symmetry ZZ of the end piece (10, 110).

11. Assembly according to claim 9 or 10, in which the working rotating member is a working bearing (30, 130).

12. Assembly according to claim 9, in which the adjustment rotating member is an adjustment bearing adapter (20) or an adjustment bearing (21; 120).

13. Assembly according to any one of claims 9 to 12, in which is inserted:
- either the adjustment bearing adapter (20) or the adjustment bearing (21) intended to be used for the balancing operation of a roller, the adjustment bearing adapter (20) and the adjustment bearing (21) comprising an outer ring (24), the diameter of the part of the outer ring (24) in contact with the inner wall of the cylindrical housing (19) being equal to or smaller by up to 0.1 mm than the diameter of the cylindrical internal housing (19) so as to be slidingly mounted,
- or the working bearing (30) intended to be used on a production machine, the working bearing having an outer diameter equal to or greater by up to 0.1 mm than the diameter of the cylindrical internal housing (19) so as to be tight-fitted.

14. Assembly according to claim 13, in which the length of the first housing (12) along the axis ZZ is such that when the adjustment bearing (120) is inserted therein and abutting against the annular wall (13), the cylindrical outer wall of the adjustment bearing (120) in contact with the wall of the housing is a band whose surface area is comprised between 66% and 90% of the total area of the cylindrical outer wall of the adjustment bearing (120).

15. Assembly according to claim 13 or 14, in which the contact surface of the adjustment bearing (120) with the end piece is entirely in the part of the end piece located between the second transverse plane (72) and a third transverse plane (73) in which the clamping surface (46) extends longitudinally along the axis ZZ, the transverse plane (73) being perpendicular to the longitudinal axis of symmetry ZZ of the end piece (110).

16. Assembly according to claim 13, 14 or 15, in which the diameter of the first housing (12) intended to receive the adjustment bearing (120) is equal to or greater by up to 0.1 mm than the outer diameter of the adjustment bearing (120) while the diameter of the second housing (14) intended to receive the working bearing (130) is equal to or smaller by up to 0.1 mm and preferably by up to 0.05 mm than the outer diameter of the working bearing (130).

17. Assembly according to any one of claims 13 to 16, in which the diameter of the working bearing (130) is smaller by at least 2 mm than the diameter of the adjustment bearing (120).

18. Assembly according to any one of claims 8 to 17, in which the profile (35) is made of carbon, is manufactured by a pultrusion process and comprises between 60% and 80% of fibres in the longitudinal direction.

19. Process for assembling a work frame with fixed shafts (60) and a guide roller for a converting or plastic film production machine by means of an assembly according to any one of claims 9 to 18 taken in combination with claim 6, which comprises the steps consisting in:
a) Pressing into each end of the profile (35), forming a guide roller, an end piece (110) until the outer end of the end piece (110) forming a rim (15) bears against the edge of the profile (35),
b) Inserting adjustment bearings (120) into the first housings (12) of each end piece (110) dimensioned so that the bearing (120) is slidingly mounted therein, said first housing (12) being located inside the end piece (110) on the side of its outer end, between the rim (15) and an annular wall (13) facing inwards which serves as a stop for the adjustment bearing (120),
c) Assembling the adjustment bearings (120) on fixed shafts (50),
d) Rotating the profile (35) and measuring the unbalance defects,
e) Disassembling the profile from the adjustment bearings (120), and correcting the unbalance defect by adding mass inside the tube,
f) Replacing the profile fitted with end pieces on the adjustment bearings (120) and the shafts (50),
g) Rotating the profile (35) again and measuring the unbalance defects,
h) Disassembling the profile from the adjustment bearings (120), and correcting the unbalance defect by adding or removing mass inside the profile,
i) Repeating steps f) to h) until the unbalance defect is reduced within the tolerated limits,
j) Assembling the working bearings (130) on fixed shafts (60),
k) Inserting an assembly composed of the working bearings (130), shafts (60) and sealing cap (39) into the second housings (14) of each end piece (110) dimensioned so that the bearing (130) is tight-fitted therein, said second housing (14) being located inside the end piece (110) on the side of its inner end after the first housing (12), between an annular lip (11) facing inwards and the annular wall (13) which guides the working bearing (130) when it is inserted into the end piece.

20. Assembly process according to claim 19, in which the bearings (120, 130) are inserted into the end piece (110) by cold shrink-fitting.
